# EUROPÄISCHE PATENTSCHRIFT

(11) **EP 1 737 709 B1**
(45) Veröffentlichungstag und Bekanntmachung des Hinweises auf die Patenterteilung: **07.11.2007**
(21) Anmeldenummer: 04764944.7
(22) Anmeldetag: 08.09.2004
(51) Int. Cl.: B60R 21/34

(54) **VORRICHTUNG ZUM SCHUTZ VON PERSONEN BEI EINEM FRONTALAUFPRALL AUF EIN KRAFTFAHRZEUG DURCH AUFSTELLEN DESSEN FRONTHAUBE**
DEVICE FOR PROTECTING INDIVIDUALS WHEN INVOLVED IN A FRONTAL COLLISION WITH A MOTOR VEHICLE BY RAISING THE FRONT HOOD THEREOF
DISPOSITIF POUR ASSURER LA PROTECTION DE PERSONNES, EN CAS DE CHOC FRONTAL AU NIVEAU D'UNE AUTOMOBILE, PAR LEVAGE DU CAPOT AVANT DE LADITE AUTOMOBILE

(30) Priorität: 25.09.2003 DE 10344445
(43) Veröffentlichungstag der Anmeldung: 03.01.2007
(73) Patentinhaber: ISE Innomotive Systems Europe GmbH, 51702 Bergneustadt (DE)
(72) Erfinder: HARTEBRODT, Raphael, 57489 Drolshagen (DE); LANG, Josef, H-1131 Budapest (HU)
(74) Vertreter: Fuchs
(86) Internationale Anmeldenummer: PCT/EP2004/010001
(87) Internationale Veröffentlichungsnummer: WO 2005/037614

(56) Entgegenhaltungen:
- WO-A-02/09983
- DE-A- 10 102 760
- DE-A- 10 249 272
- DE-A- 19 721 565
- DE-U- 20 105 884

## Beschreibung

Die Erfindung bezieht sich auf eine Vorrichtung zum Schutz von Personen bei einem Frontalaufprall auf ein Kraftfahrzeug, welches eine den Vorderwagen abdeckende, bis zur vorderen Windschutzscheibe führende, aktiv aufstellbare Fronthaube aufweist, die windschutzscheibenseitig an beiden Fahrzeugseiten jeweils über eine Scharnieranordnung drehbeweglich an der Karosse des Vorderwagens angelenkt ist, und frontseitig in einem Haubenschloss lösbar befestigt ist.

Jährlich ereignen sich zahlreiche Unfälle, bei denen Fußgänger, seien es Kinder oder Erwachsene, bzw. Zweiradfahrer oder Skater, von einem Kraftfahrzeug angefahren, auf die Front- oder Motorhaube sowie gegen die Windschutzscheibe geschleudert werden, und dabei zumindest schwere Verletzungen erfahren. Dabei ist insbesondere der Kopf sowie der Oberkörper eines erwachsenen Fußgängers bzw. Zweiradfahrers gefährdet, da dieser bei einem Zusammenprall mit einem Kraftfahrzeug - wie Crash-Versuche und auch die Erfahrungen gezeigt haben -, etwa im hinteren, relativ hartem Bereich an der Fronthaube am Übergang zur Windschutzscheibe aufschlägt und dabei erheblich verletzt wird.

Aufgrund von entsprechenden Forderungen arbeitet die Fahrzeugindustrie intensiv an dem Problem, den Personenschutz insoweit zu verbessern.

Es ist eine Reihe von Möglichkeiten zur Lösung dieses Problems bekannt geworden. Ein Lösungsprinzip besteht darin, den vorgenannten harten Übergangsbereich zur Windschutzscheibe zu entschärfen, d. h. nachgiebiger zu gestalten, z.B. durch einen sensorgesteuert aufblasbaren Luftsack oder gemäß DE 28 14 107 A in Verbindung mit der DE 28 41 315 durch eine mittels eines Aufprall-Sensors betätigte Vorrichtung zur Verstellung der Fronthaube aus einer Ruheposition in eine demgegenüber angehobene, nachgiebige Aufprallposition, d. h. eine sogenannte "aktive Fronthaube". Dadurch, dass die Fronthaube bei der von dem Aufprall-Sensor erfassten Kollision mit einem Fußgänger in eine gegenüber ihrer Ruhe - d. h. Normalfallstellung angehobene Aufprallstellung nachgiebig verstellt wird, wird ein beim Brust- oder Kopfaufprall des Fußgängers im Sinne eines günstigeren Energieabbaues zur Wirkung kommender Deformationsweg der Fahrzeugkarosserie geschaffen, der für verringerte Kopf- und Brustverzögerungen und damit für geringere Verletzungsrisiken sorgt.

Die DE 197 12 961 A1 zeigt ebenfalls einen Aufprallschutz durch eine im Kollisionsfall aktiv nachgiebig aufstellbarer Fronthaube, die windschutzscheibenseitig über eine Scharnieranordnung drehbar angeschlagen ist. Diese Scharnieranordnung ist über einen schwenkbar oder verschiebbar gelagerten Scharnierträger so an der Karosserie des Vorderwagens befestigt, dass im Falle einer Kollision des Fahrzeuges mit einer Person die Fronthaube mittels einer an dem Scharnierträger angreifenden energiespeichernder Einrichtung, z. B. einem FederKraftspeicher, nach oben verschwenkt bzw. verschoben, d. h. angehoben werden kann. Dieser bekannten Konstruktion liegt der Gedanke zugrunde, die Scharnieranordnung selbst mit dem angelenkten Scharnierträger gegenüber der Karosserie anzuheben, so dass es nicht notwendig ist, eine komplexe Entkoppeleinrichtung zwischen Scharnieranordnung und Fronthaube im Falle eines Aufpralles vorzusehen.

Die Lösungen nach dem vorgenannten Stand der Technik zur aktiven Fronthaube mit windschutzscheibenseitiger Anhebung der Fronthaube über den Scharnierdrehanschlag sehen vor, dass das vordere Haubenschloss im geschlossenen Zustand verbleibt. Dadurch ist der Frontbereich der Fronthaube relativ steif und hart, was für den direkten ersten Kontakt zwischen dem Fahrzeug und der Unfallperson zu direkten Verletzungen führen kann, insbesondere im unteren Rumpfbereich der Unfallperson (Oberschenkel und Bauchbereich).

Um dies zu vermeiden, sind gemäß der DE 197 21 565 A1 und DE 101 08 880 A1 auch Konstruktionen für das sensorgesteuerte Aufstellen der Fronthaube im vorderen Hauben-Schlossbereich bekannt geworden. Die Konstruktion nach der erstgenannten DE 197 21 565 A1 mit einer zweistufigen Schlossöffnung beruht auf dem Prinzip, das Haubenschloss zunächst in der 1. Stufe zu entriegeln und dann die so entriegelte Fronthaube durch eine vorgespannte Feder um einen gewissen Hub aufzustellen, ohne dass das Schloss ganz geöffnet wird, was eine relativ komplexe Haubenschloss-Konstruktion bedingt. Die Konstruktion nach der DE 101 08 880 A1 sieht als Aufstellelement eine Kolben-Zylinder-Einheit, aktivierbar durch eine pyrotechnische Treibladung vor, die sowohl zum Aufstellen der rückwärtigen Scharnierträger als auch zum Aufstellen des vorderen Haubenschlosses dienen kann, wobei die Aufstellung des Haubenschlosses nicht näher dargestellt ist. Diese Lösung benötigt eine starre Verriegelung des aufgestellten Kolbens, welche die Deformationsfähigkeit des Systems stark einengt, da kein Federdeformationsweg gegeben ist.

WO 02/09983 A2 zeigt ebenfalls ein Aufstellelement der pyrotechnisch oder elektromagnetisch aktivierbar ist und zum Aufstellen den frontscheibenseitigen Endes der Motorhaube dient.

Der Erfindung liegt die Aufgabe zugrunde, ausgehend von der eingangs bezeichneten Vorrichtung diese so auszubilden, dass ohne Eingriff in den Haubenschloss-Mechanismus die Fronthaube bei verriegeltem Haubenschloss mit einfachen Mitteln nachgebend aufstellbar ist und auf einfache Weise im Ruhezustand mechanisch gehalten und nach einer ungewollten Auslösung in den Ruhezustand reversierbar ist.

Die Lösung dieser Aufgabe gelingt bei einer Vorrichtung zum Schutz von Personen bei einem Frontalaufprall auf ein Kraftfahrzeug, welches eine den Vorderwagen abdeckende, bis zur vorderen Windschutzscheibe führende, aktiv aufstellbare Fronthaube aufweist, die windschutzscheibenseitig an beiden Fahrzeugseiten jeweils über eine Scharnieranordnung drehbeweglich an der Karosse des Vorderwagens angelenkt ist und frontseitig in einem Haubenschloss lösbar befestigt ist, erfindungsgemäß dadurch, dass das Haubenschloss auf einem Schlossträger befestigt ist, der seinerseits mit einem Hubelement verbunden ist, das in einem fahrzeugfesten Gehäuse linear geführt gehaltert und welchem eine Aufstell-Druckfeder zugeordnet ist, und dass eine lösbare Rastverbindung zwischen ersten Rastelementen am Hubelement und zweiten Rastelementen am Gehäuse , von denen die einen radial spreizbar sind, zum lösbaren Niederhalten des Hubelementes bei vorgespannter Aufstell-Druckfeder im Ruhezustand vorgesehen ist, und dass zum Auslösen der Rastverbindung und damit der Freigabe des Hubelementes für einen begrenzten Aufstellhub des Schlossträgers ein sensorgesteuerter Aktuator mit einem längsverschiebbaren Auslöseglied und einem damit verbundenen Sperrglied vorgesehen ist, welches so ausgebildet ist, dass es im Ruhezustand im Formschluss mit den spreizbaren Rastelementen steht und diese in die komplementären Rastelemente drückt, sowie nach Auslösung durch seine Längsverschiebung den Formschluss und damit die Rastverbindung aufhebt.

Durch die erfindungsgemäße Vorrichtung kann die Fronthaube eines Kraftwagens ohne Eingriff in den Haubenschloss-Mechanismus mit einfachen Mitteln mittels eines Federspeichers im Crash-Fall nachgebend aufgestellt sowie im Ruhezustand mechanisch gegen die Vorspannkraft des Federspeichers niedergehalten werden. Wegen der aus Platzgründen notwendigen Bauweise der Vorrichtung ist es von großem Vorteil, dass auch die Haltevorrichtung aufgrund der erfindungsgemäßen Maßnahmen klein baut. Ferner ermöglicht die neue Haltevorrichtung eine sehr einfache Reversierung der aufgestellten Fronthaube.

Dadurch, dass der Schlossträger im aufgestellten Zustand eine Art federelastische Deformationszone bildet, da nunmehr der Frontbereich weniger hart bzw. steif ist, kann die Gefahr von schweren Verletzungen signifikant verringert werden.

Weiterbildungen und Ausgestaltungen der Erfindung sind in den Unteransprüchen gekennzeichnet sowie ergeben sich aus der nachfolgenden Figurenbeschreibung.

Anhand von in den Zeichnungen dargestellten Ausführungsbeispielen wird die Erfindung näher erläutert.

Es zeigen:
- Fig. 1: in einer Längsschnitt-Darstellung eine erste Ausführungsform der erfindungsgemäßen Aufstellvorrichtung mit angebrachtem Haubenschloss im niedergehaltenen Zustand durch Rasthebel,
- Fig. 2: in den Figurenteilen A - D die Abläufe beim Auslösen und Aufstellen der Vorrichtung nach Fig. 1, und
in den Figurenteilen E - G die Abläufe beim Reversieren der aufgestellten Vorrichtung in den Grundzustand nach Fig. 1,
- Fig. 3: in einer Ausschnitt-Darstellung die nähere Ausbildung der Rasthebel nach Fig. 1, die eine Rastnase aufweisen,
- Fig. 4: in einer Ausschnitt-Darstellung entsprechend Fig. 3 die Ausbildung des Rasthebels mit einem Rastkegel,
- Fig. 5: in einer Ausschnitt-Darstellung entsprechend Fig. 3 die Ausbildung des Rasthebels mit einem Rastanschlag,
- Fig. 6: in einer Teil-Längsschnitt-Darstellung eine Vorrichtung analog Fig. 1, jedoch mit einer Kugelverrastung als Haltevorrichtung im Grundzustand,
- Fig. 7: in drei Figurenteilen A - C die Abläufe beim Auslösen und Aufstellen der Vorrichtung nach Fig. 6, und
- Fig. 8: in einer schematischen Übersichtsdarstellung den Vorderwagen eines PKW mit der erfindungsgemäßen aktiven Fronthaube.

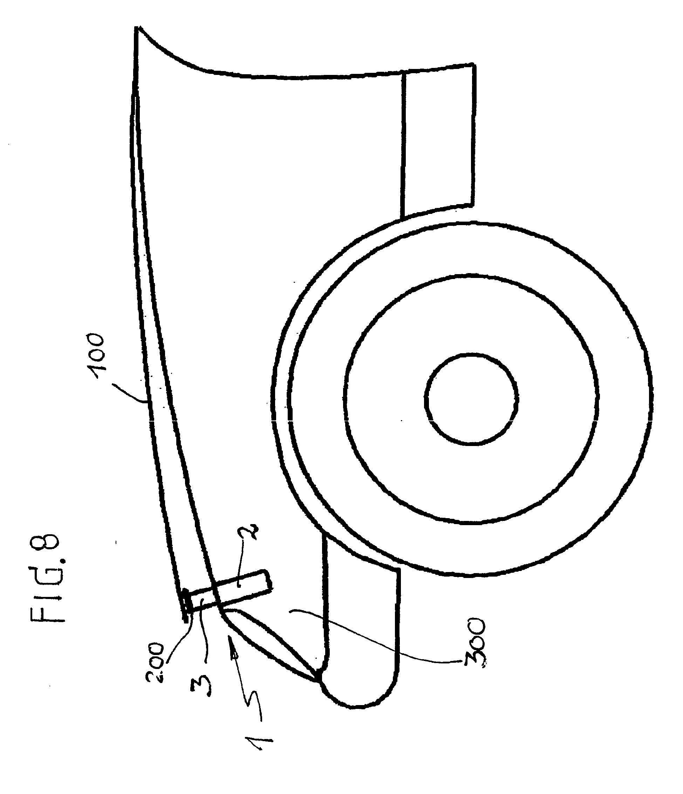

Die Fig. 8 zeigt in einer schematischen Teilansicht den Vorderwagen eines Personenkraftwagens, dessen Fronthaube 100 mittels der erfindungsgemäßen Vorrichtung 1 zum Schutz von Personen bei einem Frontalaufprall auf die Fronthaube im Bereich des Haubenschlosses 200 in Schutzposition aufgestellt ist. Diese Vorrichtung weist ein Gehäuse 2 auf, das an der Karosserie 300 des Vorderwagens fahrzeugfest angebracht ist, und besitzt ein im Gehäuse 2 linear geführtes Aufstellelement 3, auf dem kopfseitig das Haubenschloss 200 angebracht ist, das im Kollisionsfall zusammen mit dem Aufstellelement 3, ohne dass das Schloss entriegelt werden muss, ausgefahren wird.

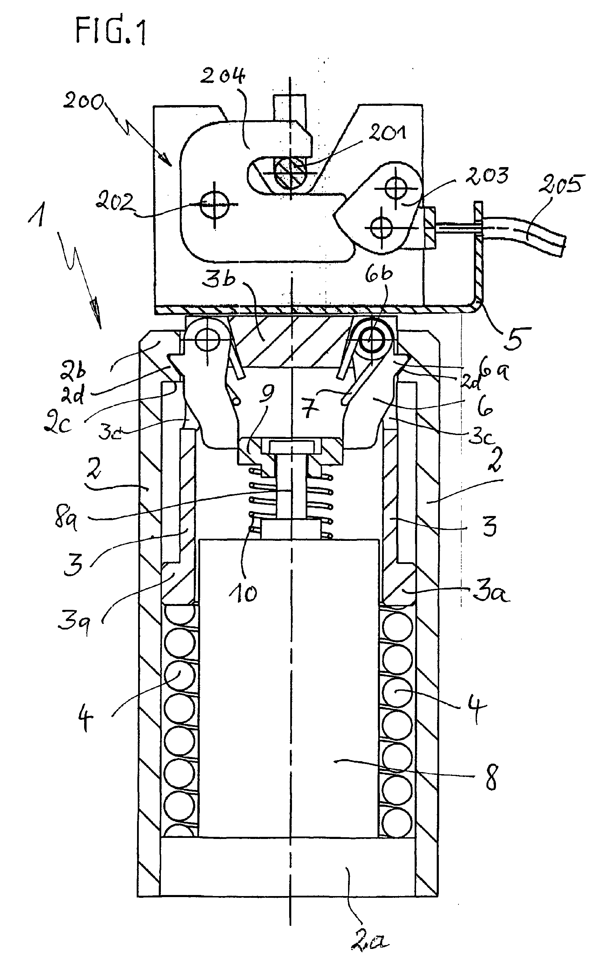

Anhand der Figuren 1 bis 7 werden im folgenden verschiedene konstruktive Ausführungsformen der erfindungsgemäßen Aufstell-Vorrichtung 1 beschrieben.

Die Fig. 1 zeigt in einer Längsschnitt-Darstellung eine erste Ausführungsform der erfindungsgemäßen Aufstell-Vorrichtung 1 für die Fronthaube im gehaltenen Grundzustand. Sie besitzt ein zylindrisches bzw. rohrförmiges Gehäuse 2, das fahrzeugfest im Bereich des Haubenschlosses angebracht ist, und ein zylindrisches im Gehäuse 1 geführtes, linear mittels einer Druckfeder 4 aufstellbares Hubelement, das Aufstellelement 3. Das Aufstellelement 3 weist einen unteren, ringförmig umlaufenden Bund 3a auf, der zur unteren Führung des Aufstellelementes dient, und an dem die Druckfeder 4 angreift, die am anderen Ende sich am Boden 2a des Gehäuses 2 abstützt. Im dargestellten Zustand ist die Druckfeder 4 vorgespannt und bildet damit einen Federkraftspeicher.

Kopfseitig besitzt das Aufstellelement eine fest angebrachte Kopfplatte 3b, auf dem ein Träger für das Haubenschloss 200, im folgenden als Schlossträger 5 bezeichnet, fest angebracht ist. Das Haubenschloss 200 ist der Einfachheit halber nur symbolisch dargestellt. Es weist einen mit der Fronthaube verbundenen Schlossbolzen 201 und einen um die Achse 202 mittels eines Entriegelungselementes 203 schwenkbaren Schlossriegel 204 auf, wobei das Entriegelungselement 203 in konventioneller Weise durch einen Bowdenzug 205 betätigbar ist.

In der Fig. 1 ist das Haubenschloss im verriegelten Zustand dargestellt. Wird das Aufstellelement 3 in noch zu beschreibender Weise aufgestellt, wird auch der Schlossträger 5 samt Haubenschloss 200, das verriegelt bleibt, aufgestellt.

Zum Halten des Aufstellelementes 3 gegen die Vorspannkraft der Aufstell-Druckfeder 4 im Grundzustand sind zwei Rast-Haltehebel 6 mit Rastnase 6a vorgesehen, die gegenüberliegend in der Kopfplatte 3b des Aufstellelementes 3 um eine Achse 6b drehbar angelenkt sind und jeweils durch eine Schenkelfeder 7 im verrastenden, d.h. im haltenden Sinne vorgespannt sind. Durchbrüche 3c im zylindrischen Teil des Aufstellelementes 3 gewährleisten eine Verschwenkbarkeit der Rast-Haltehebel um den notwendigen Winkelbereich.

Es können auch mehr als zwei Rast-Haltehebel 6, z.B. vier Rast-Haltehebel, vorzugsweise symmetrisch entlang der Kopfplatte 3b verteilt, vorgesehen sein. Prinzipiell kann auch nur ein einziger Rast-Haltehebel vorgesehen sein, wie noch erläutert wird.

Das Gehäuse 2 besitzt kopfseitig einen durchmesserverjüngten Bundbereich 2b, dessen Durchmesser auf den Durchmesser des zylindrischen Teiles des Aufstellelementes 3 abgestimmt ist, und der damit zur zusätzlichen Führung des Aufstellelementes während dessen Aufstellung dient. Die untere Ringfläche 2c des Gehäuse-Bundbereiches 2b dient als Anschlag für den Bund 3a des Aufstellelementes und begrenzt daher dessen Aufstellhub.

Im Gehäuse-Bundbereich 2b sind Rastausnehmungen 2d, vorzugsweise umlaufend ausgebildet, deren Konfiguration komplementär zu derjenigen der Rastnasen 6a der Rast-Haltehebel 6 ist. Die Rastausnehmungen am Gehäuse und die Rastnasen am Aufstellelement bilden daher, wie dargestellt, eine das Aufstellelement 3 niederhaltende Rastverbindung.

Die Vorrichtung nach Fig. 1 weist ferner einen sensorbetätigten Aktuator 8 mit einem im aktivierten Zustand einziehenden Auslöseglied 8a auf, an dem kopfseitig ein zylindrisches Sperrglied 9 befestigt ist. An seinem kopfseitigen Ende ist vorzugsweise eine leichte Konizität in Form einer Abschrägung (Fase) ausgebildet. Eine Feder 10 sorgt dafür, dass nach einem Einziehen des Auslösegliedes 8a dieses wieder in den dargestellten Ausgangszustand zurückversetzt wird.

Im dargestellten Grundzustand drückt das Sperrglied 9 spreizend gegen die gegenüberliegenden Rast-Haltehebel 6 und hält diese im verrasteten Zustand. Ist nur ein Rast-Haltehebel vorgesehen, dann wird das Sperrglied 9 an der dem Rast-Haltehebel gegenüberliegenden Seite gleitend im Aufstellelement 3 geführt, damit es nicht seitlich ausweichen kann.

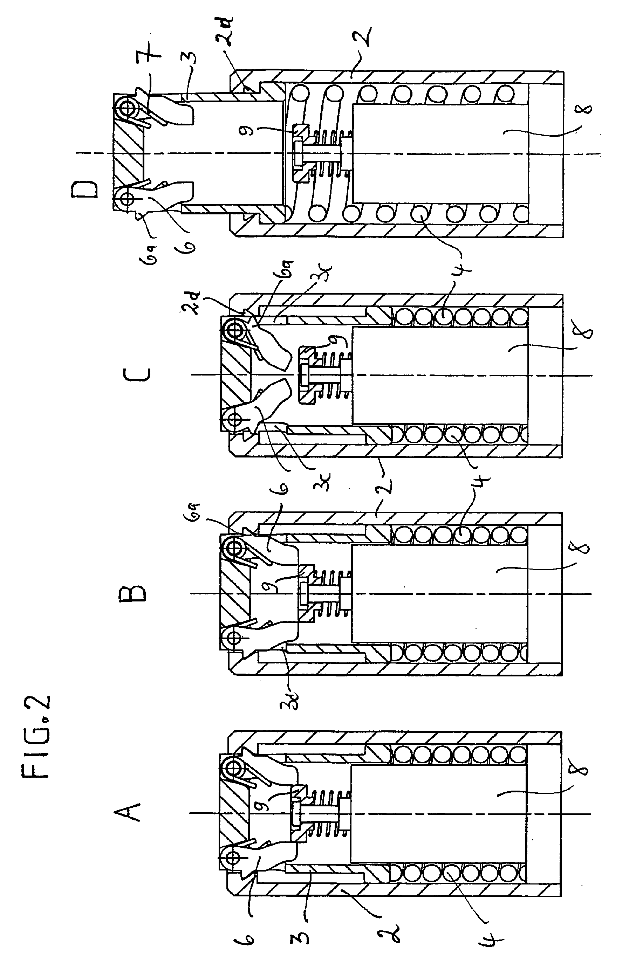

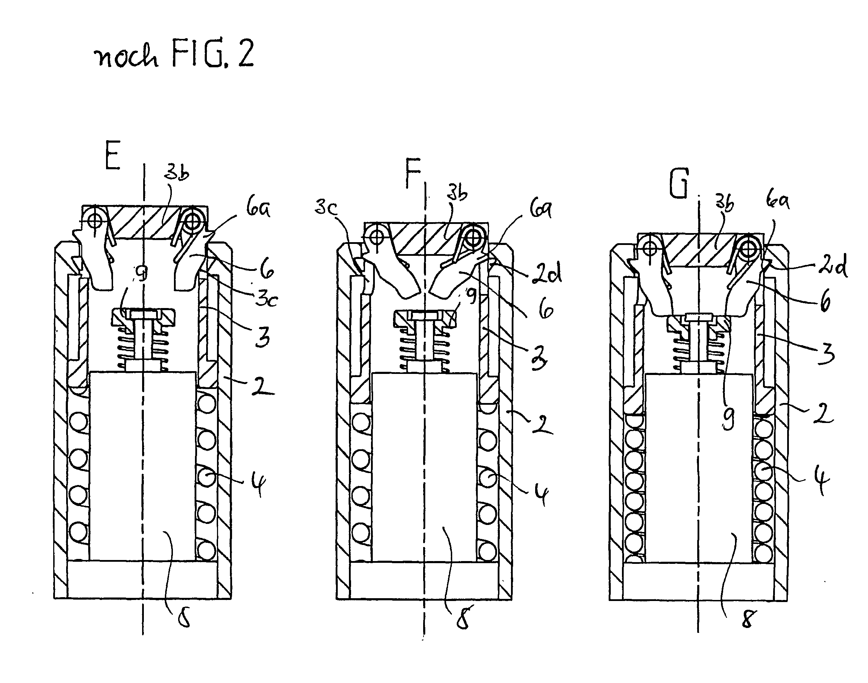

Der Aktuator 8 kann durch einen pyrotechnischen Aktuator oder durch einen Auslösemagneten gebildet sein, die jeweils im Kollisionsfall sensorgesteuert aktivierbar sind. Die verschiedenen Zustände der Aufstell-Vorrichtung 1 beim Aktivieren des Aktuators 8 sind in Fig. 2 in sieben Figurenteilen A - G dargestellt, wobei der besseren Übersicht halber nur die wesentlichen Elemente der Aufstell-Vorrichtung mit Bezugsziffern versehen sind.

Der Figurenteil A entspricht dem Grundzustand nach Fig. 1. Das Sperrglied 9 verhindert, dass die Rast-Haltehebel 6 aus der Verrastung freikommen.

Wird nun das Sperrglied 9 eingezogen, kann die Aufstell-Druckfeder 4 die Rast-Haltehebel 6 aus der Verrastung der Rastnasen 6a mit den Rastöffnungen 2d im Gehäuse 2 drücken, sobald das Sperrglied 9 die Rast-Haltehebel 6 freigibt. Der Figurenteil B zeigt den Zustand kurz vor der Freigabe und der Figurenteil C den Zustand unmittelbar nach der Freigabe. Die Aufstell-Druckfeder 4 fährt dann das Aufstellelement 3 vollständig bis zum vorgegebenen Hub aus, wobei die Schenkelfedern 7 die Rast-Haltehebel 6 in die Ausgangsstellung zurückdrücken. Diesen Zustand zeigt der Figurenteil D. Das Aufstellelement kann dann im Gehäuse federelastisch auf- und abwärts gleiten. Diese elastische Nachgiebigkeit beim Aufprall mindert die Gefahr von lebensgefährlichen Verletzungen signifikant.

Da es vorkommen kann, dass die Vorrichtung 1 ausgelöst wird, ohne dass es zu einem Aufprall kommt, und um dann nicht mit vorne, wenn auch nur leicht aufgestellter und noch im Haubenschloss befindlicher Fronthaube weiterfahren zu müssen, ist vorgesehen, dass der Fahrzeugführer die Vorrichtung reversieren kann. Beim Reversieren der Vorrichtung wird das Aufstellelement 3 durch Druck auf die Fronthaube nach unten gedrückt, bis die Rast-Haltehebel wieder selbsttätig einrasten. Dieser Reversiervorgang ist in den Figurenteilen E - G in verschiedenen Zuständen dargestellt. Gemäß Fig. 2G kommen beim Reversieren die Rast-Haltehebel auf dem Sperrglied stirnseitig zur Anlage. Wird dann noch weiter Reversiert, d.h. eingedrückt, wird das Sperrglied 9 gegen die Federkraft der Feder 10 noch einige Millimeter eingedrückt. Dabei schwenken die Rast-Haltehebel noch weiter in die Halteposition nach außen, bis diese das Sperrglied freigeben und dieses unter der Federvorspannung der Feder 10 nach oben in die Halteposition entsprechend Fig. 2A fahren kann. Durch eine kleine Schräge von bis zu ca. 10° an dem Sperrelement kann das Reversieren und auch das Auslösen gefördert werden.

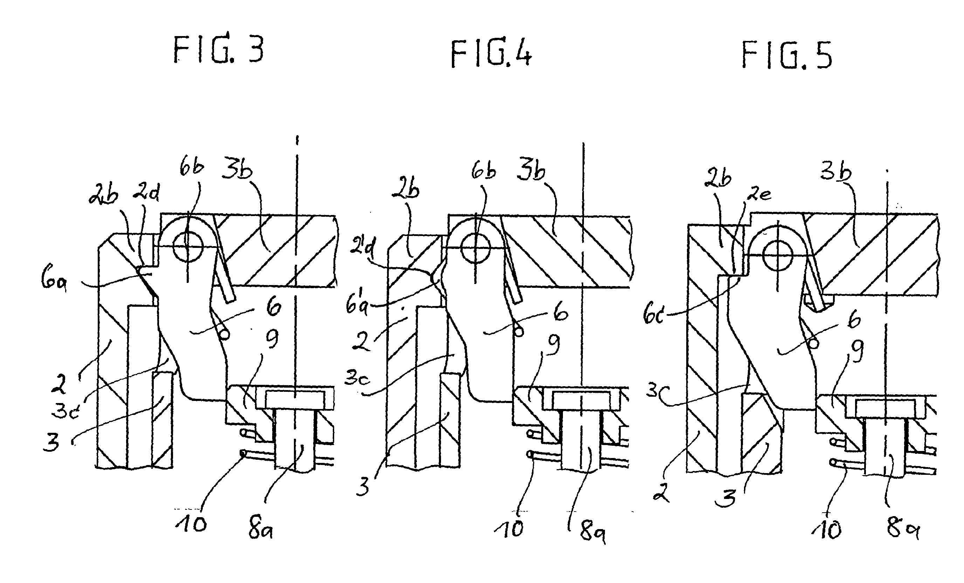

Die Figuren 3, 4 und 5 zeigen in Ausschnitt-Darstellungen verschiedene Ausbildungen des Rastteiles der Rast-Halteelemente.

Die Fig. 3 zeigt dabei zu Vergleichszwecken die Ausbildung als Rastnase 6a entsprechend der bereits beschriebenen Ausführungsform nach Fig. 1 und 2.

Die Fig. 4 zeigt die Ausbildung des Rastteiles in Form eines Rastkegels 6'a mit einer dazu komplementären vorzugsweise umlaufenden Rastöffnung 2'd im Gehäuse-Kopfteil 2b. Die Fig. 5 schließlich zeigt eine Variante mit einer Anschlagfläche 6c am Rast-Haltehebel 6 und einer umlaufenden Gegen-Anschlagfläche 2e am Kopfteil 2b des Gehäuses 2.

Die übrigen Elemente sind in allen drei Fällen gleich, ebenso die Wirkungsweise der Rast-Haltehebel, wie bereits beschrieben.

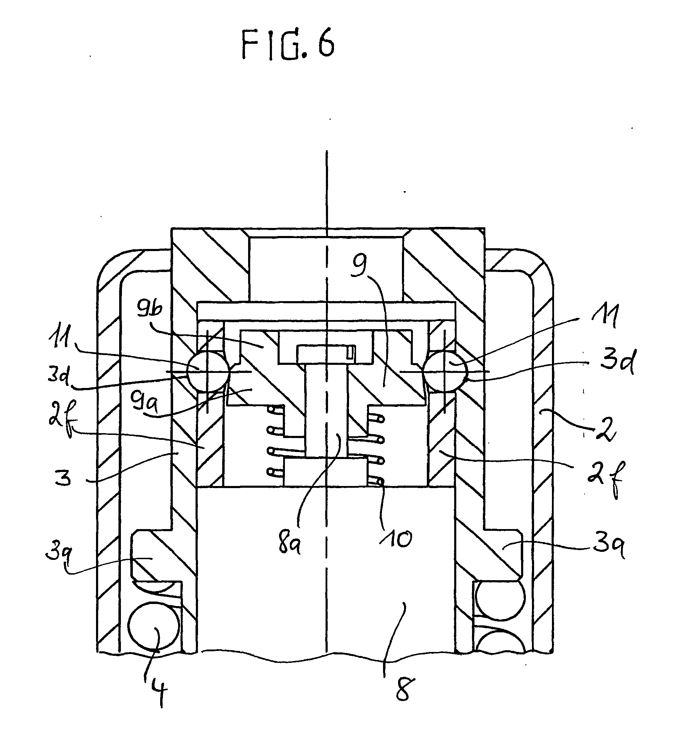

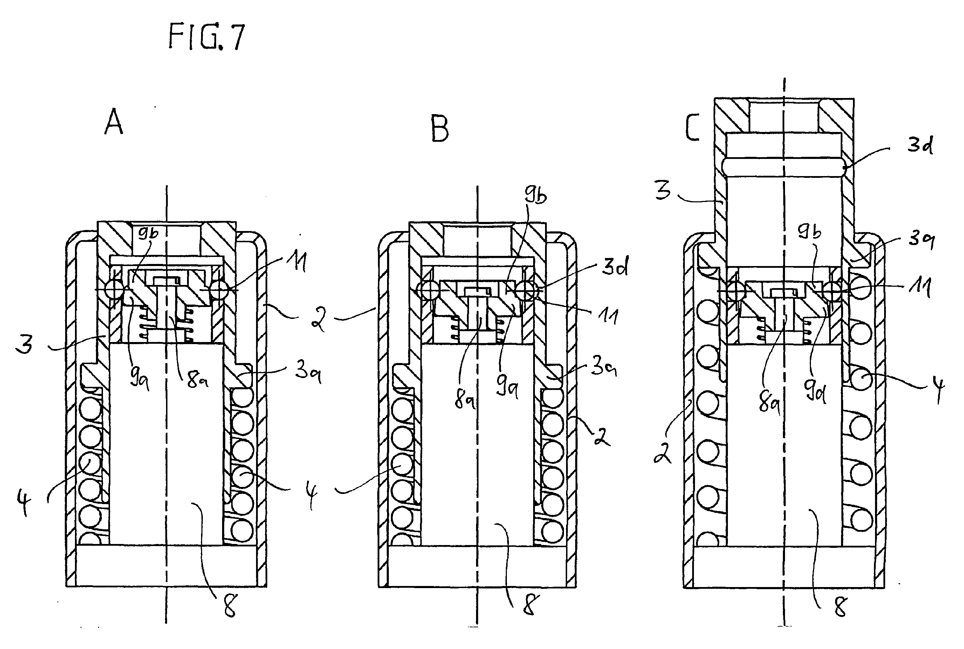

Andere Rastverbindungen sind natürlich für den Fachmann denkbar. So zeigen u.a. die Figuren 6 und 7 eine Variante der erfindungsgemäßen Rast-Halterung zwischen Aufstellelement und Gehäuse in Form einer Kugelverrastung. Die Fig. 6 zeigt dabei die entsprechende Konstruktion, während die Figurenteile A - C der Fig. 7 die Abläufe beim Aufstellen des Aufstell- oder Hubelementes 3, darstellen.

Während bei den bisher beschriebenen Ausführungsformen mit den Rast-Haltehebeln 6 die Verrastung zwischen Aufstellelement und Gehäuse durch eine Rastausnehmung am Gehäusemantel gebildet ist, ist bei der Kugelverrastung nach Fig. 6 die Verrastung zwischen dem Aufstellelement 3 und einem inneren, gehäusefesten hohlzylindrischen Teil 2f vorgesehen. Dieses Teil 2f kann ein separates Teil (Ring) sein, das auf dem Aktuator 8 befestigt ist, oder es kann einstückig als Bestandteil des Gehäuses 2 ausgebildet sein.

Ferner besitzt das Sperrglied 9 zwei Abschnitte mit unterschiedlichen Durchmessern, einem unteren Abschnitt 9a für die Haltestellung und einem oberen durchmesserkleineren Abschnitt 9b für die Freigabestellung, mit einem gerundeten Übergang als eine Art Gleithilfe.

Das innere Gehäuseteil 2f besitzt zwei, vorzugsweise vier gegenüberliegende Bohrungen für die formschlüssige Aufnahme von zwei Rastkugeln 11, die sich in den Bohrungen radial bewegen können. Prinzipiell kann, analog der Ausführung mit Rast-Haltehebeln, nur eine Rastkugel vorgesehen sein.

Das hohlzylindrische Aufstellelement 3 besitzt an seiner Innenwandung zwei gegenüberliegende kalottenförmige Ausnehmungen 3d für die Verrastung mit den Rastkugeln 11. Vorzugsweise ist jedoch die Ausnehmung 3d umlaufend ausgebildet.

Die Durchmesser der Abschnitte 9a und 9b des Sperrgliedes sind so bestimmt, dass im dargestellten Ruhezustand nach Fig. 6 und Figurenteil 7 A das Sperrglied die Rastkugeln 11 in die kalottenförmigen Ausnehmungen 3d drückt und damit das Aufstellelement 3 gegen die Vorspannkraft der Aufstell-Druckfedern 4 niederhält.

Wird der Aktuator 8 aktiviert und das Auslöseglied 8a mit dem Sperrglied 9 nach unten gezogen, gelangen die Rastkugeln 11 in den oberen, durchmesserkleineren Abschnitt 9b. Die Aufstellkraft der Druckfeder 4 kann nunmehr die Rastkugeln 11 radial nach innen drücken, bis diese aus den kalottenförmigen Öffnungen vollständig frei kommen. Diesen Zustand unmittelbar nach einer Auslösung zeigt der Figurenteil 7 B.

Die Aufstell-Druckfedern 7 stellen dann das Hubelement 3 auf, bis sein Bund 3a am Kopfteil des Gehäuses 2 anschlägt. Dieser Zustand ist im Figurenteil 7c dargestellt.

Das Reversieren des aufgestellten Hubelementes in den Grundzustand erfolgt sinngemäß wie im Fall des ersten Ausführungsbeispieles entsprechend den Abläufen in Fig. 2 E - G, bis die Rastkugeln wieder in die kalottenförmigen Ausnehmungen 3d einrasten und vom unteren Abschnitt 9a des Sperrgliedes in dieser Lage gehalten werden.

In einer Weiterbildung der Erfindung kann das Kugelschloss 11, 3d auch so ausgebildet sein, dass das Aufstellelement in seiner aufgestellten Position verriegelt ist, wobei die Rastkugeln 11 so ausgebildet sein können, dass sie bei Überschreiten einer bestimmten Kraft unter Aufhebung der Verriegelung deformierbar sind und somit als Soll-Deformationsstellen wirken.

Als Erweiterung des Systems ist es möglich, die Vorrichtung 1 zusätzlich mit einer präventiven Aufstellung zu versehen, z.B. mittels eines Spindel-Getriebemotors. Durch eine sogenannte Nahfeldsensorik wird ein Fußgänger im Vorfeld erkannt und die Fronthaube in einer vorbestimmten Zeit aufgestellt. Sollte in der vorbestimmten Zeit die Aufstellungshöhe nicht erreicht werden und kommt es zu einem Kontakt mit einem Fußgänger, wird zusätzlich der Aktuator mit zu Hilfe genommen, um schnellstmöglich die vorbestimmte Aufstellungshöhe zu erreichen.

Die Fig. 8 zeigt die Ausführung eines Kraftfahrzeuges mit aktiv aufstellbarer Fronthaube 100, bei der nur das Haubenschloss 200 sensorgesteuert aufstellbar ist.

Es ist jedoch auch eine Ausführung möglich, bei der zusätzlich die in Fig. 8 nicht dargestellten Scharniere der Fronthaube aufstellbar sind, z.B. durch eine Vorrichtung nach der älteren deutschen Patentanmeldung 102 43 497.2, bestehend aus einem Scharnierträger für die mittelbare karosserieseitige Anlenkung, der aufstellbar an der Karosse des Vorderwagens angebracht ist, und aus einer an dem Scharnierträger angreifenden energiespeichernden Einrichtung in Form einer Federspeicher-Anordnung sowie aus einer sensorgesteuerten Haltevorrichtung für einen Wirkeingriff mit dem Scharnierträger.

Die erfindungsgemäße Aufstell- und Haltevorrichtung baut sehr kompakt. Die Gesamthöhe der Vorrichtung beträgt ca. 72 mm, ihr Durchmesser liegt bei ca. 42 mm, und der Aufstellhub beträgt ca. 25 mm.

## Patentansprüche

1. Vorrichtung (1) zum Schutz von Personen bei einem Frontalaufprall auf ein Kraftfahrzeug, welches eine den Vorderwagen abdeckende, bis zur vorderen Windschutzscheibe führende, aktiv aufstellbare Fronthaube (100) aufweist, die windschutzscheibenseitig an beiden Fahrzeugseiten jeweils über eine Schamieranordnung drehbeweglich an der Karosse des Vorderwagens angelenkt ist, und frontseitig in einem Haubenschloss (200) lösbar befestigt ist, **dadurch gekennzeichnet, dass** das Haubenschloss (200) auf einem Schlossträger (5) befestigt ist, der seinerseits starr mit einem Hubelement (3) verbunden ist, das zusammen mit dem Schlossträger (5) in einem fahrzeugfesten Gehäuse (2) axial linear geführt gehaltert und welchem eine Aufstell-Druckfeder (4) zugeordnet ist, und dass eine lösbare Rastverbindung zwischen mindestens einem ersten Rastelement (6, 3d) am Hubelement (3) und einem zweiten gehäusefesten Rastelement (2d, 11), von denen eines beweglich ausgebildet ist, zum lösbaren Niederhalten des Hubelementes (3) bei vorgespannter Aufstell-Druckfeder (4) im Ruhezustand vorgesehen ist, und dass zum Auslösen der Rastverbindung und damit der Freigabe des Hubelementes (3) für einen begrenzten Aufstellhub des Schlossträgers (5) im Gehäuse (2) ein sich axial erstreckender sensorgesteuerter Aktuator (8) mit einem axial einziehbaren stiftförmigen Auslöseglied (8a) und einem damit kopfseitig verbundenen zylindrischen Sperrglied (9) angeordnet ist, welches so ausgebildet ist, dass es im Ruhezustand im Formschluss mit dem beweglichen Rastelement (6, 11) steht und dieses in das zugehörige komplementäre Rastelement (2d, 3d) drückt, sowie nach Auslösung durch seine axiale Längsverschiebung den Formschluss und damit die Rastverbindung aufhebt.

2. Vorrichtung nach Anspruch 1, **dadurch gekennzeichnet, dass** das Gehäuse (2) rohrförmig und das darin geführte Hubelement (3) hohlzylindrisch ausgebildet ist.

3. Vorrichtung nach Anspruch 2, **dadurch gekennzeichnet, dass** das Hubelement einen unteren Bund (3a) besitzt, an dem das eine Ende der Druckfeder (4) angreift, dessen anderes Ende sich am Gehäuseboden (2a) abstützt.

4. Vorrichtung nach Anspruch 1 oder 2, 3, **dadurch gekennzeichnet, dass** am kopfseitigen Ende des Hubelementes (3) zwei Rasthebel (6) gegenüberliegend drehbar angelenkt sind, die jeweils an einem Hebelarm das erste Rastelement (6a) für den Rasteingriff mit dem zweiten Rastelement (2d) am Gehäuse (2) aufweisen und mit dem anderen Hebelarm in lösbarem formschlüssigen, spreizenden Wirkeingriff mit dem Sperrglied (9) bringbar sind.

5. Vorrichtung nach Anspruch 4, **dadurch gekennzeichnet, dass** das erste Rastelement (6'a) am Rasthebel (6) nasenförmig und das zugehörige zweite Rastelement (2d) am Gehäuse (2) als umlaufende Hinterschneidung ausgebildet sind.

6. Vorrichtung nach Anspruch 4, **dadurch gekennzeichnet, dass** das erste Rastelement (6a) am Rasthebel (6) kegelförmig und das zugehörige zweite Rastelement (2d) am Gehäuse (2) umlaufend komplementär dazu ausgebildet sind.

7. Vorrichtung nach Anspruch 4, **dadurch gekennzeichnet, dass** beide Rastelemente als Anschlagflächen (2e, 6c) ausgebildet sind.

8. Vorrichtung nach einem der Ansprüche 4 bis 7, **dadurch gekennzeichnet, dass** die Rasthebel (6) im verrastenden Sinne jeweils durch eine Schenkelfeder (7) vorgespannt sind.

9. Vorrichtung nach einem der Ansprüche 4 bis 8, **dadurch gekennzeichnet, dass** das Sperrglied (9) kopfseitig angefast ist.

10. Vorrichtung nach einem der Ansprüche 1 bis 3, **dadurch gekennzeichnet, dass** zwei, das zweite Rastelement bildende Rastkugeln (11) gegenüberliegend formschlüssig, und radial verschiebbar gehäusefest aufgenommen sind, denen als erstes Rastelement eine umlaufende Rille (3d) mit kalottenförmigem Querschnitt am Hubelement (2) zugeordnet ist, wobei die Rastkugeln (11) in lösbarem, formschlüssigen spreizenden Wirkeingriff mit dem Sperrglied (9) bringbar sind.

11. Vorrichtung nach Anspruch 8, **dadurch gekennzeichnet, dass** das Sperrglied (9) zwei Abschnitte (9a, 9b) mit unterschiedlichen Durchmessern aufweist, mit dem durchmessergrößeren Abschnitt (9a) für die Halteposition und dem durchmesserkleineren Abschnitt (9b) für die Auslöseposition.

12. Vorrichtung nach einem der Ansprüche 1 bis 11, **dadurch gekennzeichnet, dass** dem Auslöseglied (8a) eine Rückstellfeder (10) zum Zurückstellen des Sperrgliedes (9) in seine Grundposition nach einer Auslösung zugeordnet ist.

## Claims

1. Device (1) for protecting individuals when involved in a frontal collision with a motor vehicle, with an actively-raisable hood (100) covering the front of the vehicle and extending to the front windscreen, articulated in a rotatable manner to the body of the front of the vehicle by an arrangement of hinges on both sides of the vehicle at the windscreen end, the front of which is removably engaged in a hood catch (200), **characterized in that** the hood catch (200) is mounted on a catch support (5), which is itself rigidly connected to a lifting element (3) which, in conjunction with the catch support (5), is linearly and axially guided in a housing (2) which forms a permanent part of the vehicle and to which a lifting pressure spring (4) is allocated, and **in that** a releasable catch connection is provided between at least one first catch element (6, 3d) on the lifting element (3) and a second catch element (2d, 11) forming a permanent part of the housing, of which one is in movable form, for releasably retaining the lifting element (3) when the pressure spring (4) is pretensioned in the basic state, and **in that**, to trip the catch connection and thus release the lifting element (3) for a restricted lifting stroke of the catch support (5), an axially-extending sensor-controlled actuator (8) with an axially-retractable tripping element (8a) and with a cylindrical blocking element (9) connected to its head end, which is embodied so that it engages positively with the moveable catch element (6, 11) in the basic state, pushing the latter into the appropriate complementary catch element (2d, 3d), disengaging the positive fit and thus the catch connection by its axial displacement after tripping is located in the housing (2).

2. Device according to claim 1, **characterized in that** the housing (2) is tubular and the lifting element (3) guided within it is embodied as a hollow cylinder.

3. Device according to claim 2 **characterized in that** the lifting element has a lower collar (3a), on which one end of the pressure spring (4) acts, its other end being supported by the base of the housing (2a).

4. Device according to claims 1, 2 or 3, **characterized in that** two catch levers (6) are articulated opposite each other in a rotatable manner at the head end of the lifting element (3), each of which has the first catch element (6a) on one arm of the lever for engaging the catch with the second catch element (2d) on the housing (2) and which may be placed to interact with the blocking element (9) in a releasable, spreading positive fit by the other lever arm.

5. Device according to claim 4, **characterized in that** the first catch element (6'a) is embodied as a projection on the catch lever (6) and the appropriate catch element (2d) on the housing (2) is embodied as a circumferential undercut.

6. Device according to claim 4, **characterized in that** the first catch element (6a) of the catch lever (6) is tapered and the appropriate second catch element (2d) on the housing (2) is embodied so that it is circumferentially complementary thereto.

7. Device according to claim 4, **characterized in that** both catch elements are embodied as abutment surfaces (2e, 6c).

8. Device according to any one of claims 4 to 7, **characterized in that** the catch levers (6) are respectively pretensioned within the meaning of engagement by a coil spring (7).

9. Device according to any one of claims 4 to 8, **characterized in that** the blocking element (9) is bevelled at its head end.

10. Device according to any one of claims 1 to 3, **characterized in that** two positively-fitting catch balls (11) forming the second catch element are accommodated opposite each other forming a positive fit and are radially displaceable, to which a circumferential groove (3d) with a spherical cross-section on the first lifting element (2) is allocated as a first catch element, the catch balls (11) being placeable to interact with the blocking element (9) in a releasable, spreading positive fit.

11. Device according to claim 8, **characterized in that** the blocking element (9) has two sections (9a, 9b) of differing diameter, the section with the larger diameter (9a) for the holding position and the section with the smaller diameter (9b) for the tripped position.

12. Device according to any one of claims 1 to 11, **characterized in that** a return spring (10) for returning the blocking element (9) to its basic position after tripping is allocated to the actuator element (8a).

## Revendications

1. Dispositif (1) pour la protection de personnes en cas de collision frontale avec un véhicule automobile qui présente un capot avant (100) relevable activement qui recouvre l'avant de la voiture et va jusqu'à l'avant du pare-brise, capot avant qui est articulé côté pare-brise de manière mobile en rotation sur chacun des deux côtés du véhicule par l'intermédiaire d'un arrangement à charnières à la carrosse de l'avant du véhicule et est fixé côté avant de manière détachable dans une serrure de capot (200), **caractérisé en ce que** la serrure de capot (200) est fixée sur un support de serrure (5) qui pour sa part est relié de façon rigide avec un élément de levage (3) qui est maintenu ensemble avec le support de serrure (5) dans un boîtier (2) fixe sur le véhicule, avec guidage linéaire axial, et auquel est affecté un ressort de pression de relèvement (4), et **en ce qu'**un lien à crans détachable est prévu entre au moins un premier indexeur mécanique (6, 3d) sur l'élément de levage (3) et un deuxième indexeur mécanique (2d, 11) fixe sur le véhicule, indexeurs dont l'un est mobile, pour maintenir l'élément de levage (3) en position basse de manière détachable lorsque le ressort de pression de relèvement (4) est précontraint au repos, et **en ce qu'**un actionneur (8) commandé par capteur qui s'étend axialement et comporte un élément de déclenchement (8a) sous forme de goupille rétractable et un élément de blocage (9) cylindrique relié côté tête à ce dernier est disposé dans le boîtier (2) pour déclencher le lien à crans et ainsi la libération de l'élément de levage (3) pour une course de relèvement limitée du support de serrure (5), élément de blocage qui est formé de manière à être en assemblage par forme au repos avec l'indexeur mécanique (6, 11) mobile et à presser ce dernier dans l'indexeur mécanique (2d, 3d) complémentaire correspondant ainsi qu'à supprimer l'assemblage par forme et, ainsi, le lien à crans après déclenchement par son décalage longitudinal axial.

2. Dispositif selon la revendication 1, **caractérisé en ce que** le boîtier (2) a une forme tubulaire et l'élément de levage (3) qui est conduit à l'intérieur de ce dernier a la forme d'un cylindre creux.

3. Dispositif selon la revendication 1, **caractérisé en ce que** l'élément de levage comporte un collet de butée (3a) inférieur sur lequel prend une extrémité du ressort de pression (4) dont l'autre extrémité s'appuie sur le fond du boîtier (2a).

4. Dispositif selon la revendication 1 ou 2, 3, **caractérisé en ce que** sont articulés de manière rotative à l'extrémité côté tête de l'élément de levage (3) deux leviers à crans (6) opposés qui présentent chacun sur un bras de levier le premier indexeur mécanique (6a) pour la prise encliquetante avec le deuxième indexeur mécanique (2d) sur le boîtier (2) et peuvent être mis avec l'autre bras de levier en prise effective détachable par forme et écartante avec l'élément de blocage (9).

5. Dispositif selon la revendication 4, **caractérisé en ce que** le premier indexeur mécanique (6'a) sur le levier à crans (6) est en forme d'ergot et le deuxième indexeur mécanique (2d) correspondant sur le boîtier (2) est en forme de dépouille circonférentielle.

6. Dispositif selon la revendication 4, **caractérisé en ce que** le premier indexeur mécanique (6a) sur le levier à crans (6) a une forme conique et le deuxième indexeur mécanique (2d) correspondant sur le boîtier (2) est un élément circonférentiel complémentaire au premier élément.

7. Dispositif selon la revendication 4, **caractérisé en ce que** les deux indexeurs mécaniques sont formés comme surfaces de butée (2e, 6c).

8. Dispositif selon l'une quelconque des revendications 4 à 7, **caractérisé en ce que** les leviers à crans (6) sont chacun précontraints dans le sens encliquetant par un ressort à branches (7).

9. Dispositif selon l'une quelconque des revendications 4 à 8, **caractérisé en ce que** l'élément de blocage (9) est chanfreiné côté tête.

10. Dispositif selon l'une quelconque des revendications 1 à 3, **caractérisé en ce que** deux boules d'arrêt (11) opposées qui constituent le deuxième indexeur mécanique sont logées par forme et de manière radialement décalable, boules auxquelles sont affectés comme premier indexeur mécanique une rainure circonférentielle (3d) de section en forme de calotte sur l'élément de levage (2), étant donné que les boules d'arrêt (11) peuvent être mises en prise effective détachable par forme et écartante avec l'élément de blocage (9).

11. Dispositif selon la revendication 8, **caractérisé en ce que** l'élément de blocage (9) présente deux sections (9a, 9b) de diamètres différents, la section (9a) de plus grand diamètre étant affectée à la position d'arrêt et la section (9b) de plus petit diamètre étant affectée à la position de déclenchement.

12. Dispositif selon l'une quelconque des revendications 1 à 11, **caractérisé en ce que** un ressort de rappel (10) est affecté à l'élément de déclenchement (8a) pour le rappel de l'élément de blocage (9) à sa position de base après un déclenchement.
